# EUROPEAN PATENT APPLICATION

(11) **EP 3 196 528 A1**
(43) Date of publication of application: **26.07.2017**
(21) Application number: 15824679.3
(22) Date of filing: 21.07.2015
(51) Int. Cl.: F16L 59/02, B32B 5/02, B32B 5/26, B32B 17/02, D04H 1/4209, D04H 1/4218, D04H 1/593, E04B 1/80

(54) **INORGANIC FIBROUS INSULATING MATERIAL**

(30) Priority: 22.07.2014 JP 2014149152
(71) Applicant: Asahi Fiber Glass Co., Ltd., Tokyo 101-0045 (JP)
(72) Inventor: HOSHINO, Masaaki, Tokyo 101-0045 (JP); KOUMOTO, Takuma, Tokyo 101-0045 (JP)
(74) Representative: Gulde & Partner
(86) International application number: PCT/JP2015/070668
(87) International publication number: WO 2016/013539

(57) **Abstract**

An inorganic fibrous insulating material is provided that exhibits an excellent insulating performance wherein heat transfer by air convection within the insulating material and by the inorganic fibers is suppressed. This is an inorganic fibrous insulating material in which a plurality of inorganic fibrous mats are stacked. The inorganic fiber constituting the inorganic fibrous mat has a fiber diameter of 3 to 5 µm and a fiber length of at least 20 mm. The inorganic fibers are bonded to each other at their contact points by a thermosetting binder. The areal weight of each inorganic fibrous mat is 300 to 600 g/m², and the orientation angle of the inorganic fibrous mats with respect to a direction perpendicular to the thickness direction of the inorganic fibrous insulating material is inclined at from more than 0° to not more than 20°.

## Description

### [Technical Field]

The present invention relates to an inorganic fibrous insulating material and a method for producing same, and more particularly relates to a highly insulating inorganic fibrous insulating material for housing, construction, and equipment, and to a method for producing same.

### [Background Art]

In a known method for producing an inorganic fibrous insulating material, (1) inorganic fibers formed by a centrifugal process are blown downward by a blast of hot air and are spray coated with an uncured binder; (2) an aggregate of the binder-coated inorganic fibers (cotton made of relatively small glass fibers) is layered on a mesh conveyor being subjected to suction from underneath to form a fibrous mat having a prescribed thickness (cotton collection step) ; and (3) the binder is cured in an oven to form an inorganic fibrous insulating material having a desired density and thickness.

Improvement in the insulating performance of an inorganic fibrous insulating material is brought about not only by increasing the thickness of the insulating material, but also preferably by reducing the fiber diameter of the inorganic fiber, increasing the number of fibers per unit volume, and making the fiber orientation perpendicular to the direction of heat passage (i.e., perpendicular to the thickness direction of the inorganic fibrous insulating material).

However, in the production of an inorganic fibrous insulating material with a desired areal weight of 1200 to 4000 g/m², when the fiber diameter is made finer, this then makes it necessary to extend the residence time in the cotton collection step relative to that for a thicker fiber diameter; in addition, when the formation of a uniform fiber density is sought, constraints are produced on the amount that can be collected (corresponds to the areal weight of the fibrous mat) using the suction from underneath. This occurs because, when the fiber diameter is made finer when product with a desirable areal weight is sought, the number of fibers per unit volume then grows larger and the airflow resistance is increased as a consequence (i.e., suction is made more difficult). As a result, the balance between the suction force from underneath and the hot air blast from above is disrupted and disturbances are produced in the air flow, and, when the layering of the inorganic fiber aggregate (cotton) is performed, fibers become oriented in the thickness direction in regions in which the suction force from underneath is inadequate.

In addition, density differences are produced between the lower part of the fibrous mat, which is strongly affected by the suction force from underneath and has an increased density, and the upper part of the fibrous mat, which has a reduced density due to the small effect from the suction force. The occurrence of air convection is facilitated - and due to this the thermal conductivity is relatively high - in low-density regions and in regions where the fiber is oriented in the thickness direction; as a result, the problem of a reduction in performance as an insulating material is produced in the case of an inorganic insulating material that has been produced using a fibrous mat that contains such regions.

### [Summary of Invention]

### [Technical Problem]

The problem for the present invention is to provide an inorganic fibrous insulating material that - because it is constituted of inorganic fibers having a fine fiber diameter, has a uniform density, and has an orientation for its inorganic fibers that is nearly perpendicular to the thickness direction of the insulating material - exhibits an excellent insulating performance wherein heat transfer by air convection within the insulating material and by the inorganic fibers is suppressed.

### [Solution to Problem]

It was discovered that the aforementioned problem could be solved by stacking a low areal weight inorganic fibrous mat in which the inorganic fibers are oriented in a direction perpendicular to the thickness direction of the insulating material. That is, the present invention relates to the following 1 to 6.
1. An inorganic fibrous insulating material in which a plurality of inorganic fibrous mats are stacked, characterized in that the inorganic fibers constituting the inorganic fibrous mats each have a fiber diameter of 3 to 5 µm and a fiber length of at least 20 mm; the inorganic fibers are bonded to each other at their contact points by a thermosetting binder; the areal weight of the individual inorganic fibrous mats is 300 to 600 g/m²; and the orientation angle of the inorganic fibrous mats with respect to the direction perpendicular to the thickness direction of the inorganic fibrous insulating material is inclined at from more than 0° to not more than 20°.
2. The inorganic fibrous insulating material according to the aforementioned 1, wherein the inorganic fiber is a glass fiber that contains, based on the total mass of the contained oxide, 60 to 72 mass% SiO₂ + Al₂O₃, 1 to 7 mass% B₂O₃, 14 to 22 mass% Na₂O + K₂O, and 6 to 15 mass% MgO + CaO.
3. The inorganic fibrous insulating material according to the aforementioned 1 or 2, wherein the thermosetting binder is a thermosetting resin that cures by any reaction selected from amidation reactions, imidation reactions, esterification reactions, and transesterification reactions.
4. The inorganic fibrous insulating material according to the aforementioned 1 or 2, wherein the thermosetting binder is an aldehyde condensation resin.
5. The inorganic fibrous insulating material according to any one of the aforementioned 1 to 4, which contains 3 to 10 mass% of the thermosetting binder in the total mass of the inorganic fibrous insulating material.
6. A method of producing an inorganic fibrous insulating material, characterized in that the method comprises the following steps: producing inorganic fibers that each have a fiber diameter of 3 to 5 µm and a fiber length of at least 20 mm; applying a thermosetting binder to the inorganic fibers; accumulating the thermosetting binder-bearing inorganic fibers to form an inorganic fibrous mat having an areal weight of 300 to 600 g/m²; stacking the inorganic fibrous mat; and heating the stacked inorganic fibrous mat while compressing same to bond the inorganic fibers by the thermosetting binder to obtain an inorganic fibrous insulating material.
7. The method according to the aforementioned 6, wherein the accumulation of the inorganic fibers in the step of forming an inorganic fibrous mat is carried out using suction from underneath and an air current blast from above.
8. The method according to the aforementioned 6 or 7, wherein the step of stacking the inorganic fibrous mat is carried out by backfolding the inorganic fibrous mat.
9. The method according to any one of the aforementioned 6 to 8, wherein, in the step of stacking the inorganic fibrous mat, the inorganic fibrous mat is stacked so as to provide 4 to 12 stacking layers in the perpendicular direction.

### [Advantageous Effects of Invention]

The present invention provides an inorganic fibrous insulating material that is constituted of inorganic fibers having a fine fiber diameter, that has a uniform density, and that has an orientation for its inorganic fibers that is nearly perpendicular to the thickness direction of the insulating material.

### [Brief Description of Drawings]

[Fig. 1]

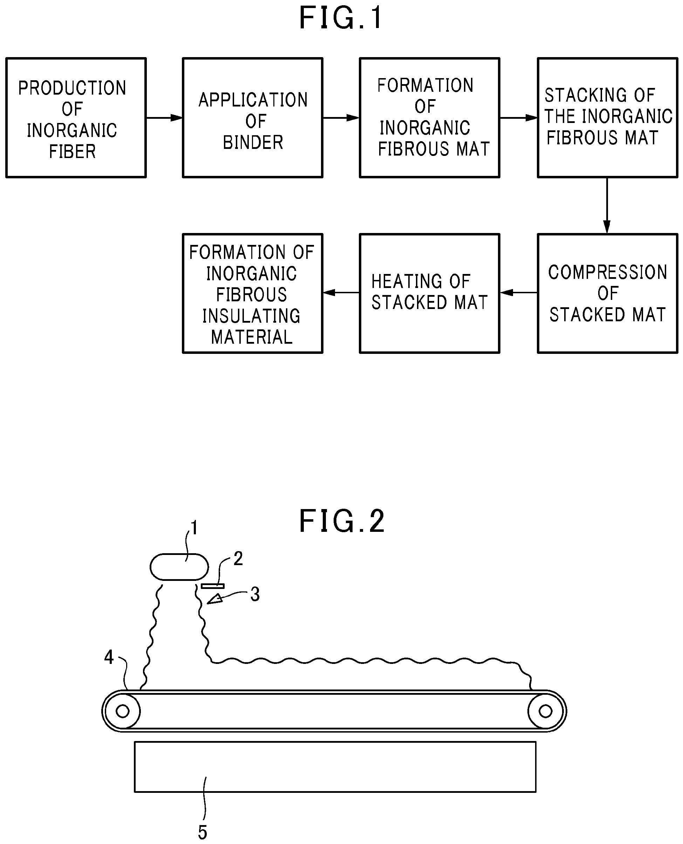

   Fig. 1 gives a flow chart of a preferred method for producing the inorganic fibrous insulating material of the present invention.
[Fig. 2]
   Fig. 2 shows an apparatus used in the step of forming inorganic fibers, the step of applying the binder, and the step of forming an inorganic fibrous mat.
[Fig. 3]

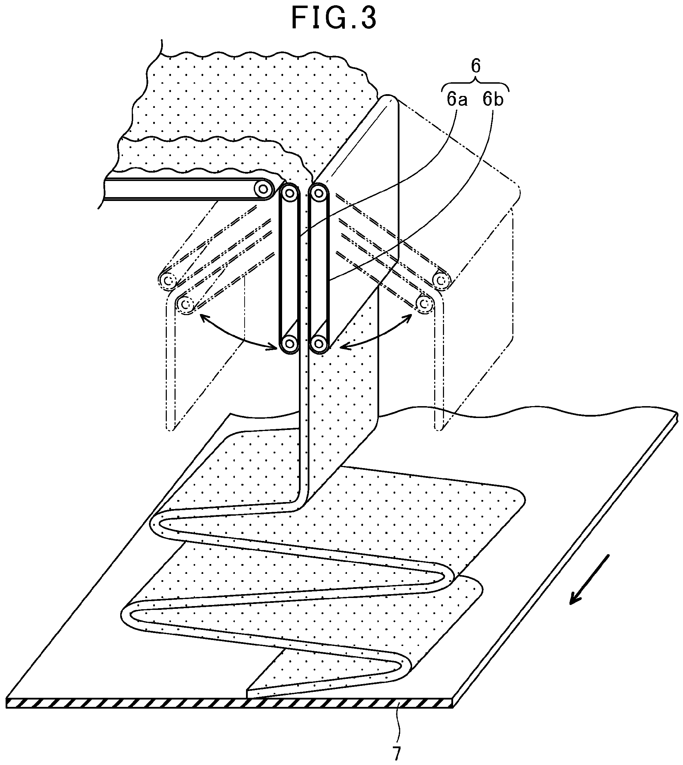

   Fig. 3 shows an apparatus used in the step of stacking the inorganic fibrous mat.
[Fig. 4]

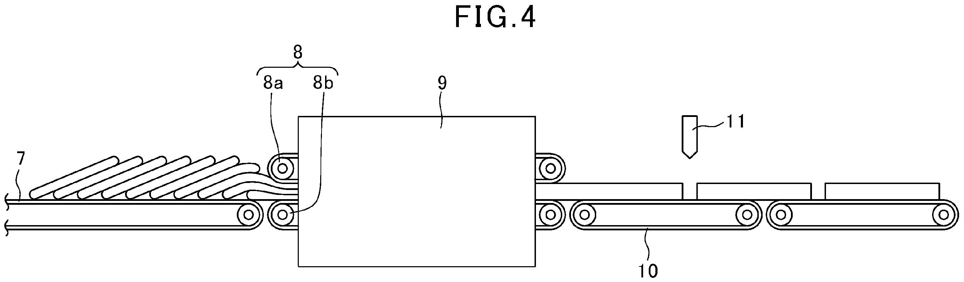

   Fig. 4 shows an apparatus used in the step of heating the stacked mats while compressing same and in a step of cutting the inorganic fibrous insulating material.
[Fig. 5]

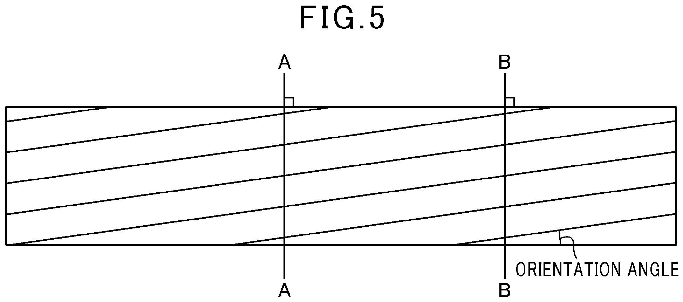

   Fig. 5 shows a cross section, provided by cutting along the direction of belt advance, of an inorganic fibrous insulating material having 6 stacking layers of the inorganic fibrous mat.

### [Description of Embodiments]

The present invention relates to an inorganic fibrous insulating material in which a plurality of inorganic fibrous mats are stacked, characterized in that the inorganic fibers constituting the inorganic fibrous mats each have a fiber diameter of 3 to 5 µm and a fiber length of at least 20 mm; the inorganic fibers are bonded to each other at their contact points by a thermosetting binder; the areal weight of the individual inorganic fibrous mats is 300 to 600 g/m²; and the orientation angle of the inorganic fibrous mats with respect to the direction perpendicular to the thickness direction of the inorganic fibrous insulating material is inclined at from more than 0° to not more than 20°.

The inorganic fiber constituting the inorganic fibrous mat can be exemplified by glass fiber, slag fiber, basalt fiber, silica fiber, and silica-alumina fiber. Glass fiber is preferred. The crow fiber preferably contains, based on the total mass of the contained oxide, 60 to 72 mass% SiO₂ + Al₂O₃, 1 to 7 mass% B₂O₃, 14 to 22 mass% Na₂O + K₂O, and 6 to 15 mass% MgO + CaO.

The use of a glass fiber with this composition facilitates control of the melt viscosity of the glass during centrifugal fiber production and thereby enables the production of an inorganic fiber that has the fiber diameter and fiber length according to the present invention.

The fiber diameter of the inorganic fiber is 3 to 5 µm and is preferably 3 to 4 µm. Methods for producing such an inorganic fiber are already known, for example, as disclosed in Japanese Patent Application Laid-open No. 2009-155172. As necessary, reference is made in the instant Description to this Japanese Patent Application Laid-open No. 2009-155172. When the attempt is made to produce a fiber with a fiber diameter of less than 3 µm using a centrifugal procedure, during fiberization by the centrifugal procedure the fiber is easily cut by the hot air blast from above and a high content of fiber with a length of less than 20 mm then occurs and, under the effect of the suction from underneath that is carried out during the cotton collection step, the fiber is prone to become easily oriented in the thickness direction of the inorganic fibrous mat. The thermal conductivity of the obtained inorganic fibrous insulating material then rises, producing the problem of a decline in the performance as an insulating material.

When the fiber diameter exceeds 5 µm, the number of fibers per unit volume is then small and the fill ratio by the fiber in the inorganic fibrous insulating material is low and the occurrence of air convection is facilitated. This causes an increase in the thermal conductivity of the resulting inorganic fibrous insulating material and a decline in the insulating performance.

The fiber length of the inorganic fiber is at least 20 mm and is preferably at least 25 mm. When the fiber length is less than 20 mm, as noted above the fiber easily becomes oriented in the thickness direction of the inorganic fibrous mat and the thermal conductivity of the inorganic fibrous insulating material may then rise.

There is no upper limit on the fiber length in the present invention. When the fiber length within the range that can be produced by a centrifugal procedure is at least 20 mm, this enables the production of the highly heat insulating inorganic fibrous insulation material that is a goal of the present invention.

The orientation angle of the inorganic fiber is an angle that is nearly parallel to the direction that is perpendicular to the thickness direction of the mat. For the present invention, the "thickness direction of the mat" is the direction that represents the distance between the two opposing sides of the mat that have the largest areas and refers to the direction along the shortest one of the width, depth, and height.

The fibers in the inorganic fibrous mat are bonded by a thermosetting binder at their points of intersection.

The thermosetting binder used in the present invention is preferably a thermosetting resin that cures by any reaction selected from amidation reactions, imidation reactions, esterification reactions, and transesterification reactions.

For example, a resin composition can be used that contains a polycarboxylic acid provided by the polymerization of an ethylenically unsaturated monomer and that also contains a crosslinking agent containing an alcohol having an amino group or imino group.

The polycarboxylic acid used here can be, for example, a polycarboxylic acid obtained by the polymerization of at least one monomer selected from ethylenically unsaturated carboxylic acid monomers, either this alone or in combination with a carboxyl group-free ethylenically unsaturated monomer.

The carboxyl group-free ethylenically unsaturated monomer can be exemplified by acrylic monomers such as methyl (meth)acrylate, ethyl (meth)acrylate, n-butyl (meth)acrylate, isobutyl (meth)acrylate, t-butyl (meth)acrylate, 2-ethylhexyl (meth)acrylate, cetyl (meth)acrylate, n-stearyl (meth)acrylate, ethoxy diethylene glycol (meth)acrylate, methyl 3-methoxy(meth)acrylate, ethyl 3-methoxy(meth)acrylate, butyl 3-methoxy(meth)acrylate, cyclohexyl (meth)acrylate, benzyl (meth)acrylate, isobornyl (meth)acrylate, tetrahydrofurfuryl acrylate, 2-hydroxyethyl acrylate, 2-hydroxypropyl acrylate, 4-hydroxybutyl acrylate, the mono (meth) acrylates of trihydric and higher hydric polyols, aminoalkyl (meth)acrylate, N-alkylaminoalkyl (meth)acrylate, and N,N-dialkylaminoalkyl (meth)acrylate; vinyl monomers such as vinyl alkyl ether, N-alkylvinylamine, N,N-dialkylvinylamine, N-vinylpyridine, N-vinylimidazole, and N-(alkyl)aminoalkylvinylamine; amide monomers such as (meth)acrylamide, N-alkyl(meth)acrylamide, N,N-dialkyl(meth)acrylamide, N,N-dialkylaminoalkyl(meth)acrylamide, diacetone (meth)acrylamide, N-vinylformamide, N-vinylacetamide, and N-vinylpyrrolidone; aliphatic unsaturated hydrocarbons such as ethylene, propylene, isobutylene, isoprene, and butadiene; styrene monomers such as styrene, α-methylstyrene, p-methoxystyrene, vinyltoluene, p-hydroxystyrene, and p-acetoxystyrene; vinyl ester monomers such as vinyl acetate and vinyl propionate; as well as acrylonitrile and glycidyl (meth) acrylate. The combination with one or two or more of these can be used. However, N-methylol(meth)acrylamide and methyl-N-methylol(meth)acrylamide are to be avoided because when heated these produce a crosslinking reaction and release formaldehyde.

The aforementioned ethylenically unsaturated carboxylic acid monomers can be exemplified by acrylic acid, methacrylic acid, crotonic acid, fumaric acid, maleic acid, 2-methylmaleic acid, itaconic acid, 2-methylitaconic acid, α,β-methyleneglutaric acid, monoalkyl maleate, monoalkyl fumarate, maleic anhydride, acrylic anhydride, β-(meth)acryloyloxyethylene hydrogen phthalate, β-(meth)acryloyloxyethylene hydrogen maleate, and β-(meth)acryloyloxyethylene hydrogen succinate.

The crosslinking agent contained in the thermosetting resin contains, as indicated above, an alcohol that has an amino group and/or an imino group.

This alcohol can be exemplified by alkanolamines such as ethanolamine, isopropanolamine, diethanolamine, and diisopropanolamine and by the polyamine polyols provided by the addition of ethylene oxide or propylene oxide to an amine such as an aliphatic polyamine [for example, ethylenediamine, diethylenetriamine, triethylenetetramine, tetraethylenepentamine, pentaethylenehexamine, 1,2-diaminopropane, 1,3-diaminopropane, 1,4-diaminobutane, 1,6-diaminohexane, 3,3'-iminobis(propylamine), 3-(methylamino)propylamine, 3-(dimethylamino)propylamine, 3-(ethylamino)propylamine, 3-(butylamino)propylamine, N-methyl-3,3'-iminobis(propylamine), and polyethyleneimine], an aromatic polyamine [for example, phenylenediamine, o-tolidine, m-toluylenediamine, m-xylylenediamine, dianisidine, diaminodiphenyl ether, 1,4-diaminoanthraquinone, 3,3'-dimethyl-4,4'-diaminobiphenyl, 4,4'-diaminobenzanilide, and 4,4'-diamino-3,3'-diethyldiphenylmethane], or a heterocyclic amine [for example, piperazine, 2-methylpiperazine, 1-(2-aminoethyl)piperazine, 2,5-dimethylpiperazine, cis-2,6-dimethylpiperazine, bis(aminopropyl)piperazine, 1,3-di(4-piperidyl)propane, 3-amino-1,2,4-triazole, and 1-aminoethyl-2-methylimidazole].

At least one or more dialkanolamine, e.g., diethanolamine, diisopropanolamine, and so forth, is preferably incorporated as a crosslinking agent in the present invention.

The dialkanolamines, because they have boiling points of at least 200°C even while having smaller molecular weights than the aforementioned polyamine polyols, exhibit a high reactivity with polycarboxylic acids and exhibit little volatilization in the curing step for the inorganic fibrous insulating material and thus present excellent economics.

The thermosetting resin may additionally contain a polyol other than the aforementioned alcohol as a crosslinking agent.

This polyol is preferably a water-soluble polyol and can be specifically exemplified by aliphatic polyols such as 1,2-ethanediol (ethylene glycol) and its dimer and trimer, 1,2-propanediol (propylene glycol) and its dimer and trimer, 1,3-propanediol, 2,2-methyl-1,3-propanediol, 2-butyl-2-ethyl-1,3-propanediol, 1,3-butanediol, 1,4-butanediol, 2-methyl-2,4-butanediol, 1,5-pentanediol, 3-methyl-1,5-pentanediol, 2-methyl-2,4-pentanediol, 1,6-hexanediol, 1,4-cyclohexanediol, 2-ethyl-1,3-hexanediol, 2-hydroxymethyl-2-methyl-1,3-propanediol, 2-ethyl-2-hydroxymethyl-2-methyl-1,3-propanediol, 1,2,6-hexanetriol, and 2,2-bis(hydroxymethyl)-2,3-propanediol; trialkanolamines such as triethanolamine and triisopropanolamine; saccharides such as glucose, fructose, mannitol, sorbitol, and maltitol; polyester polyols between the aforementioned polyols and, e.g., phthalic acid, adipic acid, azelaic acid, and so forth; as well as polyethylene glycol, polypropylene glycol, and acrylic resin-type polyols. The combination with a single one of these or two or more may be used. Among the preceding, the trialkanolamines are preferred because they have high boiling points and poor volatilities.

The thermosetting binder used in the present invention is preferably an aldehyde condensation resin. Aldehyde condensation resins can be exemplified by resole-type phenolic resins, amino resins, and furan resins.

The phenolic resins are resins obtained by an addition reaction between a phenol and an aldehyde. The phenol can be exemplified by phenol, cresol, xylenol, resorcinol, and their modifications, while the aldehyde can be exemplified by formaldehyde, acetaldehyde, furfural, and paraformaldehyde.

The amino resins are resins obtained by an addition reaction between an aldehyde and urea or an amino group-bearing compound derived from urea, e.g., melamine, acetoguanamine, or benzoguanamine. Analogously to this, use can also be made of resins obtained by an addition reaction between an aldehyde and an amino group-bearing compound such as a polyacrylamide, aminoethanol, polyamine, and so forth.

When an aldehyde condensation resin is used, a single such resin may be used by itself or a mixture of the aforementioned resins may be used. For example, a portion of a phenolic resin may be replaced with a melamine resin or a urea resin.

In addition to the thermosetting resin that is the main component, an additive, e.g., apHmodifier, cure promoter, silane coupling agent, colorant, antidusting agent, neutralizing agent that neutralizes the alkali component that elutes from the inorganic fiber, and so forth, may as necessary be added to the thermosetting binder used in the present invention. The individual components in the binder are mixed using a common method and adjustment to a prescribed concentration is carried out by adding water.

The inorganic fibrous mat contains 3 to 10 mass% and preferably 3 to 6 mass% of the thermosetting binder with respect to the total mass of the fibrous mat.

The areal weight of each inorganic fibrous mat in the present invention is 300 to 600 g/m² and preferably 350 to 550 g/m².

When the areal weight of the inorganic fibrous mat is less than 300 g/m², variations in the areal weight are then readily produced in the cotton collection step and variations in the thermal conductivity are produced in the obtained inorganic fibrous insulating material and the problem may arise that a uniform insulating performance is not obtained.

When, on the other hand, the areal weight exceeds 600 g/m², the residence time in the cotton collection step then becomes extended and variations in the density are readily produced in the thickness direction within the inorganic fibrous mat by the suction from underneath. Thus, the lower portion of the inorganic fibrous mat, which is strongly impacted by the suction from underneath, assumes a higher density while the upper portion, which is weakly impacted by the suction, assumes a lower density. When such a lower density region is locally present within the inorganic fibrous insulating material, air convection in this region is then difficult to suppress and the insulating performance of the inorganic fibrous insulating material may be lowered.

An inorganic fibrous insulating material having a higher and more uniform insulating performance can be produced when the areal weight of the inorganic fibrous mat is 350 to 550 g/m². The areal weight can be easily adjusted into this range by adjusting the speed of the cotton collection belt.

As described in the following, the inorganic fibrous insulating material of the present invention is provided by stacking and unifying the inorganic fibrous mat obtained in the cotton collection step. The fibrous layers corresponding to the individual mat layers are somewhat distinguishable in the ultimately obtained inorganic fibrous insulating material. However, they are unified as a whole by the action of the compression and binder during passage through a bonding step.

The orientation angle of the inorganic fibrous mat (i.e., the orientation angle of the inorganic fibers) is inclined at from greater than 0° to 20° with respect to the direction perpendicular to the thickness direction of the inorganic fibrous insulating material. In the present invention, this "thickness direction of the inorganic fibrous insulating material" refers to the direction that represents the distance between the two opposing sides of the inorganic fibrous insulating material that have the largest areas and refers to the direction along the shortest one of the width, depth, and height.

The closer the orientation angle of the inorganic fibrous mat is to 0° with respect to the direction perpendicular to the thickness direction of the inorganic fibrous insulating material, the closer is the orientation of the fibers within the inorganic fibrous insulating material to perpendicular with respect to the heat throughflow direction, and a higher insulating performance may then be expected. However, no method exists, other than stacking cut-to-size inorganic fibrous mats, for bringing the orientation angle to 0°, which makes continuous production impossible and presents a substantial problem with regard to productivity.

Accordingly, in the present invention, an inorganic fibrous mat in which the inorganic fiber has been oriented in one direction is stacked on a moving member, e.g., a conveyor, while it is moving, and the angle of orientation of the inorganic fibrous mat in the obtained inorganic fibrous insulating material is controlled using the speed of the moving member and the width of the inorganic fibrous mat.

The obtained stacked inorganic fibrous mat is heated while under compression and a final mat is obtained in which immobilization has been brought about at the fiber intersections by the thermosetting binder; this is finally cut to a standardized size and distributed.

When the orientation angle of the inorganic fibrous mat in the inorganic fibrous insulating material exceeds 20°, little air convection inhibiting action is provided by the inorganic fibers in the inorganic fibrous insulating material, and the problem may then arise of a reduced insulating performance by the obtained inorganic fibrous insulating material.

The number of inorganic fibrous mat layers is 4 to 12 and preferably 6 to 10. When the number of inorganic fibrous mat layers exceeds 12, the orientation angle of the inorganic fibrous mat can exceed 20° and the insulating performance of the inorganic fibrous insulating material is then reduced, making this disfavored.

When the number of layers of the inorganic fibrous mat is 6 to 10, the orientation angle assumes a uniform 3° to 10° at an areal weight of 350 to 550 g/m² for the inorganic fibrous mat and an inorganic fibrous insulating material having a high and desirable insulating performance can then be obtained.

The inorganic fibrous insulating material of the present invention can be produced, for example, by a method that contains the following steps:
forming inorganic fibers;
applying a thermosetting binder to the inorganic fibers;
accumulating the thermosetting binder-bearing inorganic fibers to form an inorganic fibrous mat;
stacking the inorganic fibrous mat;
compressing the stacked inorganic fibrous mat; and
heating the compressed inorganic fibrous mat to bond the inorganic fibers by the thermosetting binder to obtain an inorganic fibrous insulating material.

A preferred method of producing the inorganic fibrous insulating material of the present invention is described below with reference to the figures.

Fig. 1 gives a flow chart for a preferred method of producing the inorganic fibrous insulating material of the present invention. The production method shown in Fig. 1 includes forming inorganic fibers, applying a binder, forming an inorganic fibrous mat, stacking the inorganic fibrous mat, compressing the stacked mat, heating the stacked mat, and cutting the inorganic fibrous insulating material.

Fig. 2 shows a preferred apparatus for use in the step of forming inorganic fibers, the step of applying a binder, and the step of forming an inorganic fibrous mat. In Fig. 2, a fiberization apparatus 1, a binder application apparatus 2, and an air blast apparatus 3 are disposed from the left in the figure above the cotton collection belt 4 moving in a clockwise rotation, while a suction apparatus 5 is disposed underneath the cotton collection belt 4. A plurality of each of the fiberization apparatus 1, the binder application apparatus 2, and the air blast apparatus 3 may be disposed in correspondence to the density, thickness, width, and so forth of the inorganic fibrous mat that is formed. In Fig. 2, a binder sprayed by the binder application apparatus 2 is applied to the inorganic fiber spun out from the fiberization apparatus 1, and the inorganic fiber is then accumulated in mat form on the cotton collection belt 4 due to the suction from the suction apparatus 5 and the air flow ejected from the air blast apparatus 3, thereby forming an inorganic fibrous mat.

Fig. 3 shows a preferred apparatus for use in the step of stacking the inorganic fibrous mat. In Fig. 3, a swinging apparatus 6 is disposed at the downstream end of the cotton collection belt 4 and a conveyor belt 7 is disposed below the swinging apparatus 6. The swinging apparatus 6 contains two swinging belts 6a and 6b, and the swinging belts 6a and 6b are suspended in parallel to each other such that a pendulum motion can be imparted thereto by a driving apparatus (not shown). With the swinging belt 6a being rotated clockwise and the swinging belt 6b being rotated counterclockwise, the swinging apparatus 6 transports the inorganic fibrous mat downward sandwiched between the swinging belts 6a and 6b. In Fig. 3, the conveyor belt 7 is rotated so as to advance its upper side in the direction shown by the arrow. The direction of the pendulum motion of the swinging apparatus 6 shown in Fig. 3 is the width direction of the conveyor belt 7, but the direction of the pendulum motion of the swinging apparatus 6 may be the direction of advance of the conveyor belt 7. In Fig. 3, the inorganic fibrous mat is transported from the cotton collection belt 4 to the swinging apparatus 6 and is transported such that it is folded over on the conveyor belt 7 by the swinging apparatus 6.

Fig. 4 shows a preferred apparatus for use in the step of heating the stacked mats while compressing same and in the step of cutting the inorganic fibrous insulating material. In Fig. 4, a compression apparatus 8 is disposed at the downstream end of the conveyor belt 7. The compression apparatus 8 is constituted of compression belts 8a and 8b, which are disposed in parallel in an upper and lower configuration. In Fig. 4, the compression belt 8a is rotated counterclockwise and the compression belt 8b is rotated clockwise, and the compression apparatus 8 thereby transports the inorganic fibrous mat from left to right. A heating apparatus 9 is disposed so as to cover the middle portion of the compression apparatus 8. A conveyor belt 10 is disposed at the downstream end of the compression apparatus 8, and a cutting apparatus 11 is disposed above this conveyor belt 10. In Fig. 3, the folded inorganic fibrous mat is introduced into the heating apparatus 9 while being compressed and formed to a prescribed thickness by the compression apparatus 8. The binder is cured by the heating apparatus 9, thereby forming the inorganic fibrous insulating material. The resulting inorganic fibrous insulating material is transported to the conveyor belt 10 and is cut by the cutting apparatus 11 to a desired size.

Each of the steps is described in detail in the following.

First, molten glass is fiberized and an inorganic fiber, e.g., glass wool, is spun out, as is done by conventional practice. The fiberizing method can be exemplified by heretofore known centrifugal methods, flame methods, blowing methods, and so forth, but there is no particular limitation to these methods. An example of a centrifugal fiberization method and fiberization apparatus is disclosed in the previously referenced Japanese Patent Application Laid-open No. 2009-155172. This disclosure provides a method suitable for producing glass fiber having the fiber diameter used by the present invention. Other inorganic fibers can also be similarly produced.

A binder is then applied by a binder application apparatus 2 to the inorganic fiber spun from the fiberization apparatus 1. A heretofore known spray method and so forth can be used as the method for applying the binder. The binder is sprayed after the inorganic fiber spun from the fiberization apparatus 1 has been cooled and solidified. Prior to spraying the binder, cooling water may be sprayed on the inorganic fiber to cool same.

The binder-bearing inorganic fibers, while descending toward the cotton collection belt 4, are subjected to the action of the suction force from below and air blown from above and as a result the fibers are intertwined with each other and are deposited on the cotton collection belt 4. The areal weight at this point can be brought to a desired value by adjustment based on adjustment of the speed of the cotton collection belt. In order to bring about uniform accumulation of the fibers, the cotton collection belt 4 is implemented as a foraminous conveyor that has a suction apparatus on its underside. The action of the suction at the cotton collection belt 4 brings the orientation angle of the inorganic fiber to 0° with respect to the upper side of the cotton collection belt 4. An inorganic fibrous mat is formed by the accumulation of the inorganic fibers on the cotton collection belt 4.

The inorganic fibrous mat is transported to the swinging apparatus 6 by the cotton collection belt 4. In the swinging apparatus, the swinging belts 3 and 4 are swung in a pendulum-like manner in the width direction of the conveyor belt 7 while the inorganic fibrous mat, which is continuously transported by the cotton collection belt 4, is being transported sandwiched between the swinging belts 6a and 6b onto the lower-lying conveyor belt 7. As shown in Fig. 3, the swinging apparatus 6 folds the inorganic fibrous mat while swinging and dropping same onto the underlying conveyor 7, thus stacking the inorganic fibrous mat. The moving speed of the conveyor belt 7 is made slower than the speed of delivery of the inorganic fibrous mat from the swinging apparatus 6, and the inorganic fibrous mat is then stacked in a partially overlapping regime on the conveyor belt 7. The number of stacking layers of the inorganic fibrous mat can be altered as appropriate by adjusting the swinging velocity of the swinging apparatus 6, the speed of delivery of the inorganic fibrous mat from the swinging apparatus 6, and the moving speed of the conveyor 7.

The swinging velocity of the swinging apparatus 6 is 10 to 65 m/minute back and forth.

The speed of delivery of the inorganic fibrous mat from the swinging apparatus 6 is generally 10 to 65 m/minute.

The swinging velocity of the swinging apparatus and the speed of delivery of the inorganic fibrous mat are preferably established as appropriate based on the density and dimensions of the inorganic fibrous insulating material being produced, the amount spun per unit time, the number of stacking layers, and the heating speed within the heating apparatus.

While being compressed by the compression apparatus 8, the inorganic fibrous mat stacked on the conveyor belt 7 is conveyed to the heating apparatus 9, and here the binder applied to the inorganic fiber is polymerized and cured by the application of heat in the heating apparatus 9 and the fiber-to-fiber contact points are bonded and an inorganic fibrous insulating material fixed into a prescribed mat shape is thereby formed. The resulting inorganic fibrous insulating material is cut by the cutting apparatus 11 to the prescribed product dimensions.

The pressure during compression is, for example, 100 to 250 kgf/m² and is preferably 150 to 200 kgf/cm². The heating temperature should be a temperature at which the thermosetting binder undergoes reaction, for example, 180°C to 270°C is advantageous and 200°C to 260°C is preferred.

Fig. 5 shows the cross section, made by sectioning (line A-A or line B-B) along the direction of belt advance, of an inorganic fibrous insulating material in which the number of stacking layers for the inorganic fibrous mat is 6. The number of stacking layers for the mat refers to the maximum number for the number of mat layers stacked in the thickness direction within the inorganic insulating material. Focusing on 1 layer of the inorganic fibrous mat within the inorganic fibrous insulating material, as shown in Fig. 5, while a part of the surface part of the inorganic fibrous insulating material is slightly horizontal (the portion forming the 1st layer and 6th layer from the bottom), almost the entire portion (the portion forming the 2nd to 5th layers from the bottom) is inclined. The inclined height of the inorganic fibrous mat is the value provided by subtracting the thickness of 1 layer of the inorganic fibrous mat from the thickness of the inorganic fibrous insulating material that is the final product; when the product thickness is 105 mm and the number of stacking layers is 6, the inclined height of the inorganic fibrous mat is then 87.5 mm. For a length of 1.33 m for the inclined part of a layer of the inorganic fibrous mat, the inorganic fibrous mat has an orientation angle (orientation angle θ in Fig. 5) with respect to the direction perpendicular to the thickness direction of the inorganic fibrous insulating material of 3.8 degrees.

The inorganic fibrous insulating material of the present invention is described in detail in the following using examples. However, the present invention is not limited to or by the examples.

### (Binder Preparative Example 1)

A water-soluble composition was obtained in which 100 mass parts as the solids fraction of a polyacrylic acid with an acid value of 770 mg KOH/g and a weight-average molecular weight of 2000 was mixed with 48.0 mass parts of diethanolamine as crosslinking agent (total moles of imino group and hydroxyl group in the crosslinking agent/moles of carboxyl group in the polycarboxylic acid = 1.0). 0.3 mass parts of the silane coupling agent γ-aminopropyltriethoxysilane was additionally added with stirring, followed by dilution with water to provide a solids fraction of 15% to yield a thermosetting binder 1.

### (Binder Preparative Example 2)

0.2 mass parts of the silane coupling agent γ-aminopropyltriethoxysilane was added with stirring to a mixture of 30 mass parts as the solids fraction of dimethylolurea and 70 mass parts as the solids fraction of a water-dispersed resole-type phenolic resin precursor that contained not more than 10% monomer, at least 80% dimer, and not more than 1% free phenol. A thermosetting binder 2 was obtained by dilution with water to provide a solids fraction of 15%.

### (Example 1)

A glass composition containing, based on the total mass of the contained oxide, 65.0 mass% SiO₂ + Al₂O₃, 5.0 mass% B₂O₃, 16.2 mass% Na₂O + K₂O, and 11.5 mass% MgO + CaO was melted and formed by the centrifugal method using the fiber-forming apparatus described in Fig. 1 of Japanese Patent Application Laid-open No. 2009-155172 into glass fibers with a fiber diameter of 3 µm and a fiber length of at least 20 mm using conditions of a spinner peripheral velocity of 50 m/s, an average orifice diameter of 0.3 mm, and a molten glass temperature of 1150°C. This was followed by spraying with the binder 1 and formation on the cotton collection belt, due to the suction from underneath and the air current blast from above, of a glass fibrous mat having a width of 2000 mm and an areal weight of 350 g/m².

This areal weight was adjusted by bringing the speed of the cotton collection belt to 20 m/minute. This glass fibrous mat was transported by the cotton collection belt at a mat transport speed of 20 m/minute to the swinging apparatus and was stacked in 6 layers by the swinging apparatus at a swinging velocity of 20 m/minute. Then, while applying a pressure of 200 kgf/m², the binder was cured in a 240°C oven to form a glass fibrous insulating material having a density of 20 kg/m³, a thickness of 105 mm, and a binder loading of 5 mass%.

After formation, the orientation angle of the glass fibrous mat stacked within the glass fibrous insulating material was measured with a protractor at 4°.

### (Example 2)

After passage through the same fiberization step as in Example 1, the binder 2 was applied and a glass fibrous mat having an areal weight of 530 g/m² and a width of 1000 mm was formed on the cotton collection belt. This glass fibrous mat was transported to the swinging apparatus by the cotton collection belt and was stacked into 4 layers at the swinging apparatus. The binder was cured in a 240°C oven to form a glass fibrous insulating material having a density of 20 kg/m³, a thickness of 105 mm, and a binder loading of 5 mass%.

After formation, the orientation angle of the glass fibrous mat stacked within the glass fibrous insulating material was measured with a protractor at 9°.

### (Comparative Example 1)

A glass fibrous mat was formed proceeding as in Example 1, but bringing the areal weight to 1050 g/m². The areal weight was adjusted here by bringing the speed of the cotton collection belt to 7 m/minute. This glass fibrous mat was transported to the swinging apparatus by the cotton collection belt at a mat transport speed of 7 m/minute and was stacked into 2 layers at the swinging apparatus at a swinging velocity of 7 m/minute. The binder was cured in a 240°C oven to form a glass fibrous insulating material having a density of 20 kg/m³, a thickness of 105 mm, and a binder loading of 5 mass%.

After formation, the orientation angle of the glass fibrous mat stacked within the glass fibrous insulating material was measured with a protractor at 5°.

### (Example 3)

A glass fibrous mat was formed proceeding as in Example 1, but bringing the areal weight to 470 g/m². The areal weight was adjusted here by bringing the speed of the cotton collection belt to 16 m/minute. This glass fibrous mat was transported to the swinging apparatus by the cotton collection belt at a mat transport speed of 16 m/minute and was stacked into 8 layers at the swinging apparatus at a swinging velocity of 16 m/minute. The binder was cured in a 240°C oven to form a glass fibrous insulating material having a density of 36 kg/m³, a thickness of 105 mm, and a binder loading of 7 mass%.

After formation, the orientation angle of the glass fibrous mat stacked within the glass fibrous insulating material was measured with a protractor at 4°.

### (Comparative Example 2)

A glass fibrous mat was formed proceeding as in Example 1, but bringing the areal weight to 3780 g/m². The areal weight was adjusted here by bringing the speed of the cotton collection belt to 2 m/minute. This glass fibrous mat was not stacked and was transported at a mat transport speed of 2 m/minute, and the binder was directly cured in a 240°C oven to form a glass fibrous insulating material having a density of 36 kg/m³, a thickness of 105 mm, and a binder loading of 7 mass%.

### (Comparative Example 3)

A glass fibrous mat was formed proceeding as in Example 1, but bringing the areal weight to 940 g/m² and the width to 400 mm. The areal weight was adjusted here by bringing the speed of the cotton collection belt to 0.9 m/minute. This glass fibrous mat was transported to the swinging apparatus by the cotton collection belt and was stacked into 4 layers at the swinging apparatus. The binder was cured in a 240°C oven to form a glass fibrous insulating material having a density of 36 kg/m³, a thickness of 105 mm, and a binder loading of 7 mass%.

After formation, the orientation angle of the glass fibrous mat stacked within the glass fibrous insulating material was measured with a protractor at 23°.

### (Evaluation of the variation in the density in the thickness direction)

For each of the glass fibrous insulating materials obtained in Examples 1 to 3 and Comparative Examples 1 to 3, a 300 mm square piece was cut out and was further divided into three equal parts considered in the thickness direction to obtain 3 test specimens. The density of each test specimen was measured. The variation in the density in the thickness direction for the average value of n = 5 is given in Tables 1 and 2.

### (Measurement of the thermal conductivity)

A 900 mm square test specimen was obtained from each of the glass fibrous insulating materials obtained in Examples 1 to 3 and Comparative Examples 1 to 3. The thermal conductivity was measured on each test specimen by the heat flow method at an average temperature of 25°C.

The results of the evaluations are given in Table 1 and Table 2.

**(Table 1)**

| | Example 1 | Example 2 | Comparative Example 1 |
|---|---|---|---|
| density of the glass fibrous insulating material (kg/m³) | 20 | 20 | 20 |
| evaluation of density variations | | | |
| upper portion in thickness direction | 19.8 | 19.7 | 19.0 |
| middle portion | 20.0 | 19.8 | 21.3 |
| lower portion in thickness direction | 20.0 | 20.0 | 19.6 |
| thermal conductivity (W/mK) | 0.0339 | 0.0342 | 0.0351 |

**(Table 2)**

| | Example 3 | Comparative Example 2 | Comparative Example 3 |
|---|---|---|---|
| density of the glass fibrous insulating material (kg/m³) | 36 | 36 | 36 |
| evaluation of density variations | | | |
| upper portion in thickness direction | 36.0 | 27.2 | 36.2 |
| middle portion | 36.0 | 37.9 | 36.0 |
| lower portion in thickness direction | 36.0 | 43.5 | 36.4 |
| thermal conductivity (W/mK) | 0.0319 | 0.0336 | 0.0331 |

### [Industrial Applicability]

The inorganic fibrous insulating material of the present invention is useful for application as an insulating material for the walls, floors, ceilings, and attics of detached housing, multidwelling housing units, buildings, and warehouses, as a ceiling material for executing a design, as an insulating material for equipment, and so forth.

### [Reference Signs List]

- 1: Fiberization apparatus
- 2: Binder application apparatus
- 3: Air blast apparatus
- 4: Cotton collection belt
- 5: Suction apparatus
- 6: Swinging apparatus
- 6a: Swinging belt
- 6b: Swinging belt
- 7: Conveyor belt
- 8: Compression apparatus
- 8a: Compression belt
- 8b: Compression belt
- 9: Heating apparatus
- 10: Conveyor belt
- 11: Cutting apparatus

## Claims

1. An inorganic fibrous insulating material in which a plurality of inorganic fibrous mats are stacked, **characterized in that**
inorganic fibers constituting the inorganic fibrous mats each have a fiber diameter of 3 to 5 µm and a fiber length of at least 20 mm;
the inorganic fibers are bonded to each other at contact points thereof by a thermosetting binder;
the areal weight of the individual inorganic fibrous mats is 300 to 600 g/m²; and
the orientation angle of the inorganic fibrous mats with respect to a direction perpendicular to a thickness direction of the inorganic fibrous insulating material is inclined at from more than 0° to not more than 20°.

2. The inorganic fibrous insulating material according to claim 1, wherein the inorganic fiber is a glass fiber that contains, based on the total mass of a contained oxide, 60 to 72 mass% SiO₂ + Al₂O₃, 1 to 7 mass% B₂O₃, 14 to 22 mass% Na₂O + K₂O, and 6 to 15 mass% MgO + CaO.

3. The inorganic fibrous insulating material according to claim 1 or 2, wherein the thermosetting binder is a thermosetting resin that cures by any reaction selected from amidation reactions, imidation reactions, esterification reactions, and transesterification reactions.

4. The inorganic fibrous insulating material according to claim 1 or 2, wherein the thermosetting binder is an aldehyde condensation resin.

5. The inorganic fibrous insulating material according to any one of claims 1 to 4, which contains 3 to 10 mass% of the thermosetting binder in the total mass of the inorganic fibrous insulating material.

6. A method of producing an inorganic fibrous insulating material, **characterized in that** the method comprises the following steps:
producing inorganic fibers that each have a fiber diameter of 3 to 5 µm and a fiber length of at least 20 mm;
applying a thermosetting binder to the inorganic fibers;
accumulating the thermosetting binder-bearing inorganic fibers to form an inorganic fibrous mat having an areal weight of 300 to 600 g/m²;
stacking the inorganic fibrous mat; and
heating the stacked inorganic fibrous mat while compressing same to bond the inorganic fibers by the thermosetting binder to obtain an inorganic fibrous insulating material.

7. The method according to claim 6, wherein the accumulation of the inorganic fibers in the step of forming an inorganic fibrous mat is carried out using suction from underneath and an air current blast from above.

8. The method according to claim 6 or 7, wherein the step of stacking the inorganic fibrous mat is carried out by backfolding the inorganic fibrous mat.

9. The method according to any one of claims 6 to 8, wherein, in the step of stacking the inorganic fibrous mat, the inorganic fibrous mat is stacked so as to provide 4 to 12 stacking layers in a perpendicular direction.
